# EUROPEAN PATENT APPLICATION

(11) **EP 4 772 518 A1**
(43) Date of publication of application: **08.07.2026**
(21) Application number: 24859561.3
(22) Date of filing: 21.08.2024
(51) Int. Cl.: C07F 7/21

(54) **METHOD FOR PRODUCING CYCLIC SILANE COMPOUND**

(30) Priority: 30.08.2023 JP 2023140015
(71) Applicant: Kureha Corporation, Chuo-ku Tokyo 103-8552 (JP)
(72) Inventor: KOBAYASHI, Yuto, Tokyo 103-8552 (JP); NAITO, Ryota, Tokyo 103-8552 (JP)
(74) Representative: Zimmermann & Partner Patentanwälte mbB
(86) International application number: PCT/JP2024/029582
(87) International publication number: WO 2025/047528

(57) **Abstract**

The method for producing a cyclic silane compound includes a first step of subjecting a silane compound to a polymerization reaction in a first solution containing sodium to obtain a reaction solution containing a chain polysilane compound, and a second step of subjecting the chain polysilane compound to a decomposition-conversion reaction in a second solution containing the reaction solution to obtain a cyclic silane compound. A polycyclic aromatic hydrocarbon or a polyphenyl hydrocarbon is contained in the first solution or mixed with the reaction solution, and a polyether compound represented by Formula (I) or (II) is contained in the first solution or mixed with the reaction solution.

## Description

### TECHNICAL FIELD

The present invention relates to a method for producing a cyclic silane compound.

### BACKGROUND ART

A silicon carbide fiber is a fiber having excellent heat resistance and oxidation resistance even in high temperature atmosphere at a thousand and several hundred degrees Celsius. These properties are utilized, and the silicon carbide fiber is expected to be applied in the nuclear and aerospace fields.

The silicon carbide fiber can be obtained by spinning, infusibilizing and pyrolyzing an organosilicon polymer compound such as polycarbosilane, which is a precursor. Because a silicon carbide fiber containing oxygen decomposes at a high temperature, in order to obtain a silicon carbide fiber having extreme heat resistance, incorporation of oxygen atoms into the organosilicon polymer compound constituting the fiber needs to be inhibited. Therefore, the silicon carbide fiber having extreme heat resistance is produced by using an organosilicon polymer compound having a low oxygen content and by employing a method that does not incorporate oxygen at the time of infusibilization. A polycarbosilane with an oxygen content of approximately 0.1 wt% can be produced from a cyclic silane compound, such as dodecamethylcyclohexasilane. Thus, a cyclic silane compound is useful as a raw material for an organosilicon polymer compound, which serves as a precursor of a silicon carbide fiber.

Various methods have been known as a method for producing a cyclic silane compound. For example, Patent Document 1 describes a method for producing a cyclic silane compound by adding a silane monomer dropwise in a liquid mixture of a sodium dispersion, tetrahydrofuran (THF), and a polyether compound and reacting the mixture at room temperature.

Furthermore, Patent Document 2 describes a method for producing a cyclic silane compound by 1) obtaining a chain polysilane compound by adding a silane monomer dropwise in a liquid mixture obtained by heating and mixing xylene and metallic sodium and reacting the mixture, and then 2) heating the purified chain polysilane compound, metallic sodium, and a polycyclic aromatic hydrocarbon in THF to reflux.

Furthermore, Patent Document 3 describes a method for producing a cyclic silane compound by 1) adding a silane monomer compound in a liquid mixture of a sodium dispersion and a solvent and reacting the mixture, and then 2) adding a polycyclic aromatic hydrocarbon in the reaction solution and heating the mixture to reflux.

### CITATION LIST

### PATENT DOCUMENT

Patent Document 1: JP 2021-011440 A
Patent Document 2: JP 54-130541 A
Patent Document 3: JP 2019-156792 A

### SUMMARY OF INVENTION

### TECHNICAL PROBLEM

As described in Patent Documents 2 and 3, the methods for producing a cyclic silane compound from a silane monomer via a chain polysilane compound can reduce use of an expensive reactant, such as a sodium dispersion, compared with the case described in Patent Document 1 where a cyclic silane compound is produced directly from a silane monomer. However, the method described in Patent Document 2 includes purification for removing the solvent from the synthesized polydimethylsilane and thus has a problem of complicated operation.

Thus, a cyclic silane compound is preferably obtained by performing the second step without isolating and purifying a chain polysilane compound produced in the first step (one-pot production). In the case of one-pot production, a reaction solution obtained in the first step contains a certain amount or more of a component that does not contribute to a decomposition-conversion reaction in the second step, and thus a reaction yield in the second step tends to decrease. In Patent Document 3, in order to achieve a high reaction yield, a large amount of the reactant is still required to be used. Thus, there is a demand for achieving a high reaction yield even with a small amount of the reactant while one-pot production is performed.

The present invention is completed in light of the circumstances described above, and an object of the present invention is to provide a method for producing a cyclic silane compound, the method being capable of producing a cyclic silane compound from a silane monomer at a high reaction yield in a one-pot approach, regardless of the form of the reactant to be used and even when the reactant is used in a small amount.

### SOLUTION TO PROBLEM

The present invention relates to a method for producing a cyclic silane compound described below.
[1] A method for producing a cyclic silane compound, the method including:
   a first step of subjecting a silane compound to a polymerization reaction in a first solution containing sodium to obtain a reaction solution containing a chain polysilane compound; and
   a second step of subjecting the chain polysilane compound to a decomposition-conversion reaction in a second solution containing the reaction solution to obtain a cyclic silane compound;
   a polycyclic aromatic hydrocarbon or a polyphenyl hydrocarbon being contained in the first solution or mixed with the reaction solution; and
   a polyether compound represented by Formula (I) or (II) below being contained in the first solution or being mixed with the reaction solution. 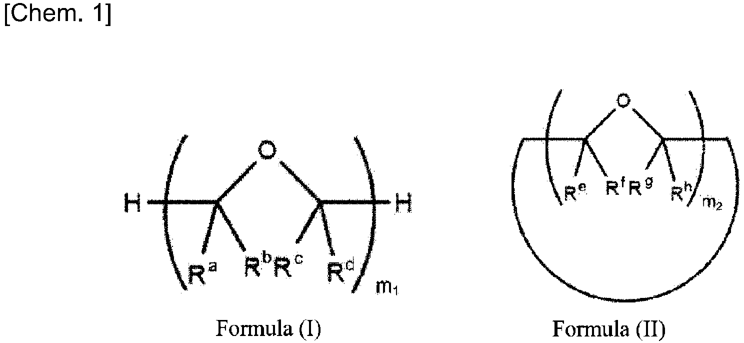
   In Formulas (I) and (II),
   R^{a} to R^{h} are each independently a hydrogen atom or an alkyl group, and
   m₁ and m₂ are each an integer of 2 or greater and 7 or less.
[2] The method for producing a cyclic silane compound according to [1], where the second step is performed in a second solution in which tetrahydrofuran is mixed with the reaction solution.
[3] The method for producing a cyclic silane compound according to [1] or [2], where the first solution contains a liquid mixture containing metallic sodium and a hydrocarbon solvent.
[4] The method for producing a cyclic silane compound according to [3], where, in the first step, the first solution is heated to a temperature not lower than a melting point of the metallic sodium.
[5] The method for producing a cyclic silane compound according to any one of [1] to [4], where the second step is performed by heating the chain polysilane compound in the second solution.
[6] The method for producing a cyclic silane compound according to [5], where the heating temperature is 40°C or higher and not higher than a reflux temperature.
[7] The method for producing a cyclic silane compound according to any one of [1] to [4], where the polyether compound represented by Formula (I) or (II) is contained in the first solution.
[8] The method for producing a cyclic silane compound according to [7], where the polyether compound represented by Formula (I) is contained in the first solution.
[9] The method for producing a cyclic silane compound according to [7] or [8], where a total molar equivalent of the polyether compound represented by Formula (I) or (II) relative to silicon atoms of the silane compound is 0.003 eq. or greater and 0.180 eq. or less.
[10] The method for producing a cyclic silane compound according to any one of [1] to [4], where the polycyclic aromatic hydrocarbon or the polyphenyl hydrocarbon is mixed with the reaction solution.
[11] The method for producing a cyclic silane compound according to [10], where biphenyl, anthracene, or naphthalene, as the polycyclic aromatic hydrocarbon, is mixed with the reaction solution.
[12] The method for producing a cyclic silane compound according to [3] or [4], where the hydrocarbon solvent is an aromatic hydrocarbon solvent.
[13] The method for producing a cyclic silane compound according to [4], where the second solution contains the hydrocarbon solvent and tetrahydrofuran, and the second solution contains the tetrahydrofuran in a volume proportion of 23 vol% or greater and 99 vol% or less relative to a total volume of the hydrocarbon solvent and the tetrahydrofuran.

### ADVANTAGEOUS EFFECTS OF INVENTION

The present invention can provide a method for producing a cyclic silane compound, the method being capable of producing a cyclic silane compound from a silane monomer at a high reaction yield in a one-pot approach regardless of the form of the reactant to be used and even when the reactant is used in a small amount.

### DESCRIPTION OF EMBODIMENTS

As described above, in a case where a first step of obtaining a chain polysilane compound from a silane monomer and a second step of subjecting the chain polysilane compound to a decomposition-conversion reaction to obtain a cyclic silane compound are performed in a one-pot approach, improving the reaction yield in the second step has been required.

In particular, sodium dispersion, which is typically used, is not only expensive but also makes it difficult to separate and recover a cyclic silane compound as described below. Thus, in place of the sodium dispersion, use of a liquid mixture prepared by melting a block of metallic sodium in a hydrocarbon solvent has been studied. However, because the liquid mixture contains a large amount of hydrocarbon solvent that does not contribute to the reaction in the second step, the reaction yield tends to decrease.

In contrast, as a result of diligent studies, the inventors of the present invention found that the yield of a cyclic silane compound can be remarkably increased by using a polycyclic aromatic hydrocarbon or a polyphenyl hydrocarbon as a reaction promoter, as well as further using a particular polyether compound in at least one of the first step or the second step, and preferably in the first step.

The mechanism is not clear, but it is assumed as follows.
The particular polyether compound tends to enhance the reactivity of a silane compound by coordinating to a sodium ion by oxygen atoms of a plurality of ether bonds and stably capturing the sodium ion. It is presumed that this allows not only promotion of the polymerization reaction of the silane compound to increase the yield of the chain polysilane compound in the first step, but also that of the decomposition-conversion reaction of the chain polysilane compound in the second step.

The method for producing a cyclic silane compound of one embodiment of the present invention will be described in detail below.

### 1. Method for Producing Cyclic Silane Compound

As described above, the method for producing a cyclic silane compound of an embodiment of the present invention includes
a first step of subjecting a silane compound to a polymerization reaction in a first solution containing metallic sodium to obtain a reaction solution containing a chain polysilane compound, and
a second step of subjecting the chain polysilane compound to a decomposition-conversion reaction in a second solution containing the reaction solution to obtain a cyclic silane compound.

A polycyclic aromatic hydrocarbon or a polyphenyl hydrocarbon is contained in the first solution or mixed with the reaction solution. Furthermore, the particular polyether compound is contained in the first solution or mixed with the reaction solution.

As described above, the polycyclic aromatic hydrocarbon or the polyphenyl hydrocarbon may be contained in the first solution or mixed with the reaction solution. In particular, from the perspective of further suppressing decomposition of the polycyclic aromatic hydrocarbon or the polyphenyl hydrocarbon by a side reaction with the silane compound, the polycyclic aromatic hydrocarbon or the polyphenyl hydrocarbon is preferably mixed with the reaction solution. In a case where the polycyclic aromatic hydrocarbon or the polyphenyl hydrocarbon is mixed with the reaction solution, the mixing may be performed between the first step and the second step or may be performed in the second step.

As described above, the particular polyether compound may also be contained in the first solution or mixed with the reaction solution. In a case where the particular polyether compound is mixed with the reaction solution, the mixing may be performed between the first step and the second step or may be performed in the second step. In particular, from the perspective of further increasing the yield of the cyclic silane compound, the particular polyether compound is preferably contained in the first solution.

That is, in the present embodiment,
1) a first step of subjecting a silane compound to a polymerization reaction in a first solution containing metallic sodium and a particular polyether compound to obtain a reaction solution containing a chain polysilane compound, and
2) a second step of subjecting the chain polysilane compound to a decomposition-conversion reaction in a second solution, in which a polycyclic aromatic hydrocarbon or a polyphenyl hydrocarbon is mixed with the reaction solution, to obtain a cyclic silane compound are preferably performed.

Each step will be described specifically below.

### 1-1. Regarding First Step

In the present embodiment, a silane compound is subjected to a polymerization reaction in a first solution containing sodium and a particular polyether compound.

Sodium in the first solution may be fine particles of metallic sodium or may be metallic sodium in a melted state. That is, the first solution may be a solution containing sodium dispersion (SD) and a particular polyether compound; or may be a solution containing a liquid mixture containing (melted) metallic sodium and a hydrocarbon solvent, and a polyether compound.

The sodium dispersion (SD) is a material in which fine particles of metallic sodium are dispersed in electrical insulating oil and which has a higher reactivity than that of a block of metallic sodium. The average particle size of the fine particles of sodium in the SD can be 1 µm or greater and 100 µm or less. The average particle size can be a value measured by a laser diffraction particle size analyzer or the like. Examples of the electrical insulating oil include aliphatic hydrocarbons such as liquid paraffin and mineral oil.

Meanwhile, because the electrical insulating oil is a water-insoluble organic compound and a cyclic silane compound has a high solubility in dispersion oil, separation and purification tend to be difficult. Thus, from the perspective of reducing production cost and/or from the perspective of facilitating separation and purification, reduction in the amount of the sodium dispersion used is desired. Thus, in the present embodiment, use of a liquid mixture containing metallic sodium and a hydrocarbon solvent is preferred.

In the liquid mixture, metallic sodium is preferably melted. The melted state means a state where metallic sodium is liquid due to heating, for example, and is different from a sodium dispersion, which is in a state where sodium is uniformly dispersed in a form of fine particles.

The first solution containing such a liquid mixture can be obtained by, for example, adding metallic sodium in a hydrocarbon solvent, then melting by heating to a temperature not lower than the melting point of metallic sodium (98°C or higher), and then further mixing with a polyether compound. The first solution can be also obtained by adding melted metallic sodium to a hydrocarbon solvent heated to a temperature not lower than the melting point of metallic sodium (98°C or higher), and then further mixing with a polyether compound.

### Hydrocarbon Solvent

The hydrocarbon solvent may be any hydrocarbon solvent as long as its boiling point is higher than the melting point of metallic sodium (98°C). That is, the boiling point of the hydrocarbon solvent is more preferably 100°C or higher and 210°C or lower, and even more preferably 110°C or higher and 170°C or lower.

Such a hydrocarbon solvent may be an aliphatic hydrocarbon solvent or may be an aromatic hydrocarbon solvent. Examples of the aliphatic hydrocarbon solvent include a hydrocarbon solvent having from 8 to 12 carbons, such as octane and decane. Examples of the aromatic hydrocarbon solvent include toluene, xylene, ethylbenzene, and mesitylene. Among these, from the perspective of facilitating formation of a complex formed from sodium and the polycyclic aromatic hydrocarbon or the polyphenyl hydrocarbon, an aromatic hydrocarbon solvent is preferred, toluene, xylene and ethylbenzene are more preferred, and toluene and xylene are even more preferred.

The content of the hydrocarbon solvent in the first solution is such that the resulting chain polysilane can be adequately stirred and dispersed in the solvent. For example, the content of the hydrocarbon solvent relative to 10 parts by mass of the silane compound in the first solution is preferably 0.7 parts by mass or greater. When the content of the hydrocarbon solvent in the first solution is 0.7 parts by mass or greater, coalescence of metallic sodium droplets is less likely to occur due to the reduction of the volume proportion of metallic sodium in the first solution. In this case, because the average droplet size can be made even smaller, the specific surface area of sodium is increased, and the reactivity of the silane compound can be further enhanced. When the content of the hydrocarbon solvent is 150.0 parts by weight or less, because the concentration of the silane compound in the system is increased, the reaction of the first step is readily promoted. From the same perspective, the content of the hydrocarbon solvent in the first solution relative to 10 parts by mass of the silane compound is more preferably 3.0 parts by mass or greater and 100.0 parts by mass or less.

The content of the hydrocarbon solvent in the first solution relative to 10 parts by mass of metallic sodium is preferably 1.0 part by mass or greater and 300.0 parts by mass or less, and more preferably 2.0 parts by mass or greater and 250.0 parts by mass or less.

### Metallic Sodium

Metallic sodium can function mainly as a reactant of the polymerization reaction.

The molar equivalent of metallic sodium relative to one functional group of an alkoxy group or a halogen atom of the silane compound in the first solution is preferably 1.00 eq. or greater and 1.80 eq. or less. When the molar equivalent of metallic sodium is 1.00 eq. or greater, the polymerization reaction of the silane compound in the first step can be accelerated. When the molar equivalent of metallic sodium is 1.80 eq. or less, the proportion of metallic sodium remained unreacted can be reduced. From the same perspective, the molar equivalent of metallic sodium in the first solution is more preferably 1.05 eq. or greater and 1.25 eq. or less.

### Particular Polyether Compound

The particular polyether compound can stably capture the sodium ion in the reaction system, when oxygen atoms of the plurality of ether bonds coordinate to a sodium ion in the reaction system. This allows acceleration of the polymerization reaction of the silane compound in the first step and/or that of the decomposition-conversion reaction of the chain polysilane compound in the second step, and thus the cyclic polysilane compound can be obtained at a high yield.

The particular polyether compound is a polyether compound represented by Formula (I) or (II).

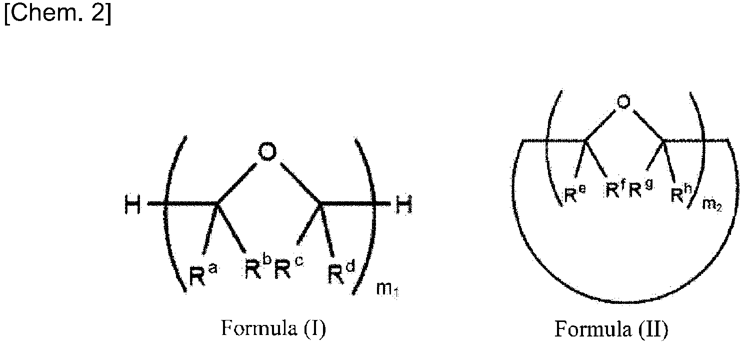

In Formulas (I) and (II), R^{a} to R^{h} are each independently a hydrogen atom or an alkyl group. Among these, R^{a} to R^{h} are each preferably a hydrogen atom or an alkyl group having from 1 to 3 carbons, more preferably a hydrogen atom, an ethyl group, or a methyl group, and even more preferably a hydrogen atom or a methyl group.

m₁ and m₂ are each an integer of 2 or greater and 7 or less. Among these, m₁ and m₂ are each preferably an integer of 2 or greater and 6 or less and, from the perspective of further accelerating the reaction by selectively capturing a sodium ion in the reaction system, more preferably 5.

The first solution may contain only one of the polyether compound represented by Formula (I) and the polyether compound represented by Formula (II) or may contain both. In particular, from the perspectives of its high boiling point, high retention in the reaction system under heating, as well as the potential for further reduction in production cost, and the like, the polyether compound represented by Formula (I) is preferred.

Examples of the polyether compound represented by Formula (I) include diglyme, triglyme, and tetraglyme. Examples of the compound represented by Formula (II) include dioxane, 12-crown-4, 15-crown-5, and 18-crown-6. Among these, from the perspective of high reaction-promoting effect, tetraglyme and 15-crown-5 are preferred.

The total molar equivalent of the polyether compound represented by Formula (I) or (II) contained in the first solution relative to silicon atoms of the silane compound is preferably 0.003 eq. or greater and 0.180 eq. or less. When the molar equivalent of the polyether compound is 0.003 eq. or greater, not only is the polymerization reaction of the silane compound further promoted, but the decomposition-conversion reaction of the second step is also further promoted, enabling a further increase in the reaction yield. When the molar equivalent of the polyether compound is 0.180 eq. or less, decomposition of the cyclic silane compound, which is the target product, can be further reduced. From the same perspective, the molar equivalent of the polyether compound is more preferably 0.030 eq. or greater and 0.120 eq. or less.

The first solution may further contain an additional solvent other than those described above as necessary. Examples of the additional solvent include ether-based solvents (provided that polyethers are excluded), such as tetrahydrofuran, 2-methyltetrahydrofuran, diethyl ether, diisopropyl ether, and t-butyl methyl ether.

### Silane Compound

Then, a silane compound is added to the first solution. The silane compound is preferably a compound represented by Formula (1) below.

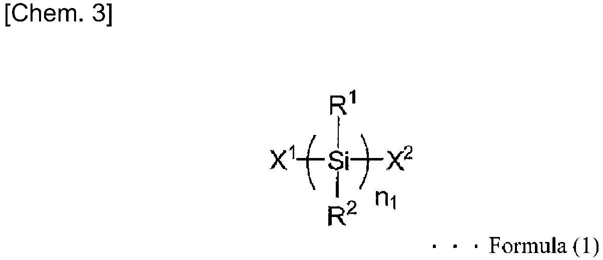

In Formula (1), X¹ and X² each represent an alkoxy group or a halogen atom. Examples of the alkoxy group include a methoxy group and an ethoxy group. Examples of the halogen atom include a chlorine atom, a bromine atom, and an iodine atom. Due to their large electronegativity difference from silicon and capability of facilitating intramolecular polarization in the silane compound, these groups or atoms are highly reactive and are substituents that function as leaving groups in reactions. Among these, from the perspective of reactivity of the silane compound, X¹ and X² are each preferably a halogen atom, and more preferably a chlorine atom.

R¹ and R² are each a hydrogen atom or a hydrocarbon group. Among these, R¹ and R² are each preferably a hydrocarbon group, more preferably an alkyl group having from 1 to 6 carbon atoms, even more preferably a methyl group or an ethyl group, and particularly preferably a methyl group.

n₁ is an integer of 1 or greater. From the perspective of enhancing reactivity of the silane compound, n₁ is preferably 1 or 2, and more preferably 1.

Examples of the compound represented by Formula (1) include dichlorodimethylsilane, dichlorodiethylsilane, dichlorodipropylsilane, dichlorodibutylsilane, dichlorodipentylsilane, dichlorodihexylsilane, dibromodimethylsilane, dibromodiethylsilane, dibromodipropylsilane, dibromodibutylsilane, dibromodipentylsilane, dibromodihexylsilane, and dichlorotetramethyldisilane. Among these, dichlorodimethylsilane is preferred. One type of the silane compound may be used, or two or more types of the silane compounds may be used.

### Polymerization Reaction

The polymerization reaction of the silane compound is preferably performed at a temperature depending on the composition of the first solution.

For example, in a case where the first solution contains the sodium dispersion, the polymerization reaction is preferably performed at 0°C or higher and not higher than the reflux temperature, and more preferably at room temperature.

Meanwhile, in a case where the first solution contains the liquid mixture of metallic sodium and the hydrocarbon solvent, the polymerization reaction is preferably performed under heating from the perspective of performing the polymerization reaction in a state where metallic sodium is melted. That is, the polymerization reaction is preferably performed while heating is performed to a temperature not lower than the melting point of metallic sodium.

The heating temperature is preferably a temperature not lower than the melting point of metallic sodium, more preferably 98°C or higher and not higher than the solvent reflux temperature, and even more preferably 100°C or higher and not higher than the solvent reflux temperature. The reaction is preferably performed in an inert gas atmosphere, such as nitrogen or argon atmosphere. Furthermore, the reaction is preferably performed at normal pressure or under increased pressure.

The addition of the silane compound may be performed continuously or intermittently but, from the perspective of production efficiency, is preferably performed continuously at a certain amount.

The average addition rate of the silane compound per unit amount (mol) of metallic sodium is preferably 0.06 hr⁻¹ or greater and 0.50 hr⁻¹ or less, and more preferably 0.10 hr⁻¹ or greater and 0.30 hr⁻¹ or less.

The average addition rate (mol·hr⁻¹) of a silane compound is a value determined by dividing a total amount (mol) of the silane compound used by addition time (hr). The average addition rate (hr⁻¹) of the silane compound per unit amount (mol) of metallic sodium is a value determined by dividing the average addition rate (mol·hr⁻¹) of the silane compound by an amount (mol) of metallic sodium.

When the average addition rate of the silane compound per unit amount (mol) of metallic sodium is 0.50 hr⁻¹ or less, decrease of the temperature of the liquid mixture to a temperature equal to or lower than the melting point of sodium can be prevented, and the reaction can be further promoted. When the average addition rate of the silane compound per unit amount (mol) of metallic sodium is 0.06 hr⁻¹ or greater, the total reaction time can be further shortened, and production efficiency can be further enhanced.

From the perspective of increasing the produced amount of the chain polysilane compound, after the addition of the silane compound is completed, stirring is preferably continued at the reaction temperature for preferably 1 hour or longer and 12 hours or less.

By the reaction, a reaction solution containing a crude polydialkylsilane (chain polysilane compound) can be obtained.

### Chain Polysilane Compound

The chain polysilane compound contains a repeating unit represented by Formula (2) below.

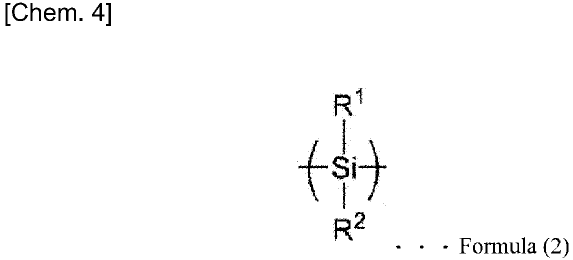

R¹ and R² in Formula (2) are the same as R¹ and R² in Formula (1).

In the chain polysilane compound, a group bonding to silicon atoms at both terminals of the molecule may be a hydrogen atom, a hydrocarbon group, an alkoxy group, a sodium atom, or a halogen atom. The alkoxy group or the halogen atom are the same as those of X¹ and X² in Formula (1). Furthermore, the sodium atom is cationized and can be coordinated by the anionized silicon atom. Since the alkoxy group and the halogen atom each have a large difference in electronegativity from a silicon atom, they are readily reduced by sodium, and can readily cause an active site. Furthermore, a sodium atom has a particularly large difference in electronegativity from a silicon atom and thus can allow the silicon atom to function as an active site. Thus, the groups at both terminals of the molecule of the chain polysilane compound may be alkoxy groups, halogen atoms, or sodium atoms.

The number of repeating units is not particularly limited and is, for example, an integer of 2 or greater, and preferably an integer of 6 or greater and 12000 or less.

### 1-2. Regarding Second Step

A second solution is obtained by mixing a polycyclic aromatic hydrocarbon or a polyphenyl hydrocarbon with the reaction solution obtained in the first step. That is, without isolating the product from the reaction solution obtained in the first step, the polycyclic aromatic hydrocarbon or the polyphenyl hydrocarbon is mixed with the reaction solution.

The second solution preferably contains tetrahydrofuran in the solution. That is, the second step is preferably performed in a second solution obtained by further mixing tetrahydrofuran with the reaction solution obtained in the first step. By this procedure, the decomposition-conversion reaction of the chain polysilane compound can proceed at a higher level.

As described above, in the solvent, such as hydrocarbon solvent, contained in the reaction solution obtained in the first step, a complex formed from sodium and the polycyclic aromatic hydrocarbon or the polyphenyl hydrocarbon, the complex being necessary for the decomposition-conversion reaction of the chain polysilane compound in the second step, is less likely to be formed. In contrast, in a case where the reaction solution contains tetrahydrofuran, a complex formed from sodium and the polycyclic aromatic hydrocarbon or the polyphenyl hydrocarbon is readily formed and tends to be stable, and thus the reactivity of the chain polysilane compound to decomposition reaction can be further enhanced.

### Tetrahydrofuran

In a case where the second solution contains the hydrocarbon solvent and tetrahydrofuran, the amount of tetrahydrofuran added in the reaction solution is preferably such that the volume proportion of tetrahydrofuran is 23 vol% or greater and 99 vol% or less relative to the total volume of the hydrocarbon solvent and tetrahydrofuran in the second solution. When the volume proportion of tetrahydrofuran is 23 vol% or greater, the decomposition-conversion reaction of the chain polysilane compound can be further promoted, and the yield of the cyclic silane compound can be further enhanced. When the volume proportion of tetrahydrofuran is 99 vol% or less, the volume ratio of the hydrocarbon solvent to metallic sodium can be increased, and thus the yield of the cyclic silane can be further enhanced because the synthesis of the chain polysilane in the first reaction can be efficiently performed.

From the same perspective, the amount of tetrahydrofuran added to the reaction solution is such that the volume proportion of tetrahydrofuran in the second solution is more preferably 25 vol% or greater and 95 vol% or less, and even more preferably 35 vol% or greater and 95 vol% or less.

In a case where the second solution contains the hydrocarbon solvent and tetrahydrofuran, the total volume of the hydrocarbon solvent and tetrahydrofuran contained in the second solution is preferably 50.0 mL or greater relative to 10 parts by mass of metallic sodium. When the total volume of the hydrocarbon solvent and tetrahydrofuran contained in the second solution is 50.0 mL or greater relative to 10 parts by mass of metallic sodium, decomposition of the produced cyclic silane compound can be further suppressed. When the total volume of the hydrocarbon solvent and tetrahydrofuran contained in the second solution is 700.0 mL or less relative to 10 parts by mass of metallic sodium, because the concentration of the silane compound in the system is increased, the reaction of the second step is readily promoted.

From the same perspective, the total volume of the hydrocarbon solvent and tetrahydrofuran contained in the second solution is more preferably 50 mL or greater and 600 mL or less relative to 10 parts by mass of metallic sodium, and particularly preferably 50 mL or greater and 550 mL or less relative to 10 parts by mass of metallic sodium.

### Polycyclic Aromatic Hydrocarbon or Polyphenyl Hydrocarbon

The polycyclic aromatic hydrocarbon or the polyphenyl hydrocarbon can function mainly as a catalyst for the decomposition-conversion reaction of the chain polysilane compound. Only one of the polycyclic aromatic hydrocarbon and the polyphenyl hydrocarbon may be mixed with the reaction solution, or both of these may be mixed with the reaction solution.

The polycyclic aromatic hydrocarbon or the polyphenyl hydrocarbon preferably forms a complex with sodium. The polycyclic aromatic hydrocarbon is a hydrocarbon compound containing two or more aromatic rings that are condensed. The polyphenyl hydrocarbon is a hydrocarbon compound containing two or more aromatic rings that are bonded by a single bond. These compounds can readily form a complex with sodium because π electrons of the plurality of aromatic rings are conjugated, and the complex formed from these can function as a reducing agent. Because of this, it is presumed that the decomposition-conversion reaction is promoted by cleavage of the silicon-silicon bond of the chain polysilane compound or the bond between a functional group and the silicon of the chain polysilane terminal. The complex formed from sodium and the polycyclic aromatic hydrocarbon or the polyphenyl hydrocarbon is more preferably formed in the presence of tetrahydrofuran.

Examples of the polycyclic aromatic hydrocarbon include naphthalene, anthracene, and phenanthrene. Examples of the polyphenyl aromatic hydrocarbon include biphenyl and terphenyl. Among these, from the perspective of further promoting the decomposition-conversion reaction, biphenyl, naphthalene, and anthracene are preferred, and naphthalene and biphenyl are more preferred.

The total molar equivalent of the polycyclic aromatic hydrocarbon and the polyphenyl hydrocarbon in the second solution relative to the silicon atoms of the charged silane compound is preferably 0.01 eq. or greater and 0.50 eq. or less. When the total molar equivalent of the polycyclic aromatic hydrocarbon and the polyphenyl hydrocarbon is 0.01 eq. or greater, the decomposition reaction of the chain polysilane compound is readily further promoted, and the yield of the cyclic silane compound is readily increased. When the total molar equivalent of the polycyclic aromatic hydrocarbon and the polyphenyl hydrocarbon is 0.50 eq. or less, decomposition of the produced cyclic silane compound can be further suppressed. From the same perspective, the total molar equivalent of the polycyclic aromatic hydrocarbon and the polyphenyl hydrocarbon is more preferably 0.04 eq. or greater and 0.32 eq. or less, and particularly preferably 0.04 eq. or greater and 0.24 eq. or less.

### Addition and Mixing

The order of mixing the reaction solution with the polycyclic aromatic hydrocarbon or the polyphenyl hydrocarbon, and tetrahydrofuran is not particularly limited. The polycyclic aromatic hydrocarbon or the polyphenyl hydrocarbon, and tetrahydrofuran may be simultaneously added to the reaction solution. Alternatively, after tetrahydrofuran is added to the reaction solution and stirred, the polycyclic aromatic hydrocarbon or the polyphenyl hydrocarbon may be added. Alternatively, after the polycyclic aromatic hydrocarbon or the polyphenyl hydrocarbon is mixed with tetrahydrofuran, the reaction solution may be added. Alternatively, after the reaction solution is mixed with tetrahydrofuran, the polycyclic aromatic hydrocarbon or the polyphenyl hydrocarbon may be added. In the present embodiment, as an example, the polycyclic aromatic hydrocarbon or the polyphenyl-based hydrocarbon and tetrahydrofuran are preferably simultaneously added to the reaction solution obtained in the first step.

### Decomposition-Conversion Reaction

In the obtained solution, the chain polysilane compound is then subjected to a decomposition-conversion reaction to obtain a cyclic silane compound. The decomposition-conversion reaction may be performed at room temperature or may be performed under heating. From the perspective of achieving a higher yield of the cyclic silane compound, the decomposition-conversion reaction is preferably performed under heating, that is, while the chain polysilane compound is heated in the solution.

The heating temperature is not higher than the reflux temperature and is, for example, 40°C or higher, preferably 50°C or higher, and more preferably 60°C or higher. However, the upper limit of the heating temperature is preferably 200°C or lower from the perspective of suppressing decomposition of the reaction product.

In a case where the second solution contains both of the hydrocarbon solvent and tetrahydrofuran, the reflux temperature is a temperature that is higher than 68°C based on the volume proportion of tetrahydrofuran and lower than the boiling point of the hydrocarbon solvent that corresponds to the volume proportion thereof.

The heating method is not particularly limited and, for example, may be a method in which the second solution is placed in an atmosphere at a predetermined temperature or may be a method in which heating is performed by a heater, water bath, oil bath, electromagnetic wave, or the like.

The reaction time indicates time passed after a target reaction temperature has been reached. In a case where the reaction is performed under heating, although the reaction time also depends on the temperature of the solution, the reaction time is, for example, preferably 1 hour or longer and 35 hours or less, and more preferably 3 hours or longer and 10 hours or less.

The mechanism of the decomposition-conversion reaction is presumed as follows.

An active site on the chain polysilane compound is formed due to change in the electronic state caused by cleavage of a bond between silicon and a group (e.g., a halogen atom) at a terminal of the chain polysilane compound molecule or a silicon-silicon bond, the cleavage being caused by a complex formed from sodium and the polycyclic aromatic hydrocarbon or the like. Thereafter, a cyclic silane compound is obtained by the cyclization in which molecular chains are cleaved at predetermined distances due to the active site.

### 2. Cyclic Silane Compound

The cyclic silane compound obtained by the method for producing a cyclic silane compound according to the present embodiment has, for example, a structure represented by Formula (3) below.

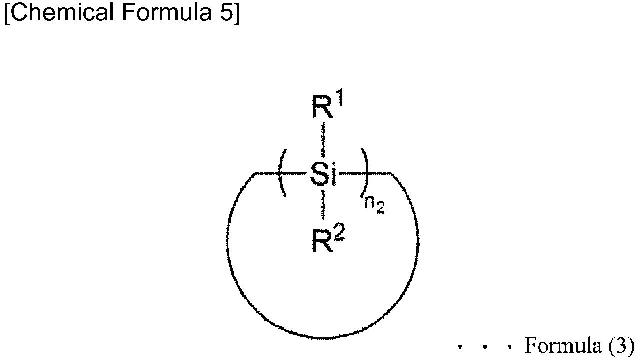

R¹ and R² of Formula (3) are identical with R¹ and R² of Formula (1), respectively.

n₂ is an integer of 3 or greater. n₂ is preferably 3 or greater and 10 or less, more preferably 5 or greater and 7 or less, and even more preferably 6.

The cyclic silane has a freely-chosen structure based on R¹ and R², and examples thereof include decamethylcyclopentasilane, dodecamethylcyclohexasilane, and tetradecamethylcycloheptasilane.

The obtained cyclic silane compound may contain a plurality of cyclic silane compounds having various n₂. The molar yield of the cyclic silane compound having n₂ of 6 (six-membered ring) is preferably 50% or greater, more preferably 60% or greater, and even more preferably 70% or greater. The yield of the cyclic silane compound can be determined by analyzing the reaction product using gas chromatography. The measurement conditions may be the same as those in Examples described below.

### 3. Variations

Note that, although the aforementioned embodiment describes an example in which the polyether compound is contained in the first solution and the polycyclic aromatic hydrocarbon or the polyphenyl hydrocarbon is mixed with the reaction solution, embodiments of the present invention are not limited to this. For example, both of the particular polyether compound and the polycyclic aromatic hydrocarbon and the like may be mixed with the reaction solution. Also in this case, the molar equivalent of the polyether compound relative to the silane compound can be the same as that described above.

Furthermore, in the embodiment described above, although an example using the liquid mixture in which metallic sodium is melted in the hydrocarbon solvent is described, a sodium dispersion may also be used.

In this case, the molar equivalent of fine particles of metallic sodium relative to one functional group of the alkoxy group or the halogen atom of the silane compound can be the same as that described above.

Furthermore, in the embodiment described above, although an example in which the second step is performed in the second solution containing tetrahydrofuran mixed with the reaction solution obtained in the first step, embodiments of the present invention are not limited to this.

In the present embodiment, the reaction solution contains the particular polyether compound. Thus, in the second step, even when tetrahydrofuran is not mixed with the reaction solution, a complex formed from sodium and the polycyclic aromatic hydrocarbon or the polyphenyl hydrocarbon can be formed. That is, even when the amount of THF used is reduced or even when a reaction solvent other than THF is used, the decomposition-conversion reaction of the chain polysilane compound can satisfactorily proceed. Thus, the second step may be performed without mixing tetrahydrofuran with the reaction solution obtained in the first step.

### EXAMPLES

The present invention will be described more specifically below based on examples, but the present invention is not limited to these examples.

### Test 1

### (1) First Step

In a 200 mL four-neck flask purged with argon, 34 mL of toluene (aromatic hydrocarbon solvent, solvent A), metallic sodium at a molar equivalent X of 2.4 eq. relative to dichlorodimethylsilane, and tetraglyme (a polyether compound represented by Formula (I) or (II), additive 1) at a molar equivalent Y of 0.04 eq. relative to dichlorodimethylsilane were charged. The mixture was then stirred while being heated at the reflux temperature (110°C), and thus metallic sodium was melted.

Then, to the obtained liquid mixture (first solution) was added dropwise 10.0 g of dichlorodimethylsilane (silane compound) for 150 minutes (average addition rate of the silane compound per unit amount (mol) of metallic sodium: 0.17 hr⁻¹), and then stirred at a reflux temperature in a range of 105°C or higher and 115°C or lower for 1.5 hours and reacted. By the procedure above, a reaction solution containing a chain polysilane compound was obtained. The obtained reaction solution was cooled to room temperature.

Note that the content of toluene in the liquid mixture (first solution) was 29.5 parts by mass relative to 10 parts by mass of the silane compound and was 68.6 parts by mass relative to 10 parts by mass of metallic sodium.

### (2) Second Step

In the reaction solution containing the chain polysilane compound, 38 mL of tetrahydrofuran (THF) and naphthalene (polycyclic aromatic hydrocarbon, additive 2) in a molar equivalent Z of 0.08 eq. relative to dichlorodimethylsilane were simultaneously added. The mixture was then stirred, and thus a solution (second solution) was prepared.

Then, the obtained solution was heated by an oil bath at the reflux temperature (73°C), stirred for 6 hours and thus allowed to react. By the procedure above, a solution containing a cyclic silane compound was obtained.

Note that the total volume of toluene and tetrahydrofuran in the second solution relative to 10 parts by mass of metallic sodium used in the first step was 167 mL, and the volume proportion of tetrahydrofuran relative to the total volume of toluene and tetrahydrofuran was 52.8 vol%.

The reaction scheme of Test 1 is as follows.

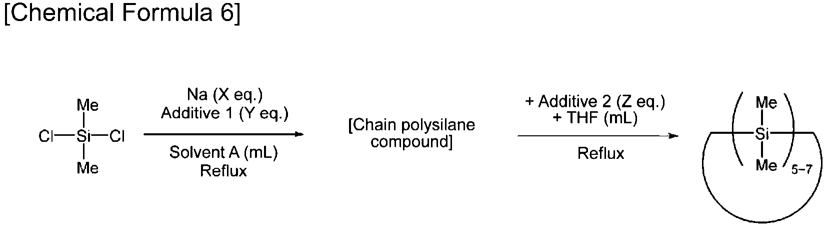

### Tests 2 to 4

Each solution containing a cyclic silane compound was obtained in the same manner as in Test 1 except for changing the type and the amount of the additive 1 added in the first step to those listed in Table 1.

### Test 5

A solution containing a cyclic silane compound was obtained in the same manner as in Test 1 except that naphthalene was not mixed in the second step.

### Test 6

A solution containing a cyclic silane compound was obtained in the same manner as in Test 1 except for changing the form of sodium added in the first step to a sodium dispersion (SD) as listed in Table 1.

### Test 7

A solution containing a cyclic silane compound was obtained in the same manner as in Test 1 except for changing the reaction temperature of the first step and the form of sodium added in the first step to those listed in Table 1.

### Test 8

A solution containing a cyclic silane compound was obtained in the same manner as in Test 1 except that the form of sodium added in the first step was changed and tetraglyme was not added.

### Tests 9 to 13

Each solution containing a cyclic silane compound was obtained in the same manner as in Test 1 except for changing the volume ratio of the solvent A contained in the first step to THF added in the second step (the volume proportion of THF relative to the total volume of the solvent A and THF in the second solution) to that listed in Table 1.

### Tests 14 to 17

Each solution containing a cyclic silane compound was obtained in the same manner as in Test 1 except for changing the total solvent amount of the solvent A added in the first step and THF added in the second step to that listed in Table 1.

### Tests 18 to 21

Each solution containing a cyclic silane compound was obtained in the same manner as in Test 1 except for changing the content of tetraglyme (additive 1) in the first step to that listed in Table 2.

### Tests 22 and 23

Each solution containing a cyclic silane compound was obtained in the same manner as in Test 1 except for changing the content of metallic sodium in the first step to that listed in Table 2.

### Tests 24 to 27

Each solution containing a cyclic silane compound was obtained in the same manner as in Test 1 except for changing the content of metallic sodium in the first step and the molar equivalent of the additive 2 mixed in the second step to those listed in Table 2.

### Test 28

A solution containing a cyclic silane compound was obtained in the same manner as in Test 1 except for changing the type of the solvent A added in the first step to that listed in Table 2.

### Test 29

A solution containing a cyclic silane compound was obtained in the same manner as in Test 1 except for changing the type of the additive 2 added in the second step to that listed in Table 2.

### Test 30

A solution containing a cyclic silane compound was obtained in the same manner as in Test 1 except for adding THF in the amount listed in Table 2 together with tetraglyme in the first step while THF was maintained at a certain volume proportion.

### Test 31

### (1) First Step

In a 200 mL four-neck flask purged with argon, 38 mL of xylene and metallic sodium in a molar equivalent relative to dichlorodimethylsilane of 2.15 eq. were charged. The mixture was then stirred while heated at 120 °C, and thus metallic sodium was melted.

Then, to the obtained liquid mixture was added dropwise 4.9 g of dichlorodimethylsilane (silane compound) for 60 minutes and then stirred at 120°C for 7 hours and allowed to react. By the procedure above, a reaction solution containing a chain polysilane compound was obtained. The obtained reaction solution was cooled to room temperature. Note that the content of the xylene in the liquid mixture (first solution) was 66.2 parts by mass relative to 10 parts by mass of the silane compound and was 164.2 parts by mass relative to 10 parts by mass of metallic sodium.

### (2) Second Step

In the reaction solution containing the chain polysilane compound, 50 mL of tetrahydrofuran (THF) and naphthalene (polycyclic aromatic hydrocarbon) in a molar equivalent Z relative to dichlorodimethylsilane of 0.23 eq. were added. The mixture was then stirred, and thus a solution was prepared.

The obtained solution was stirred at room temperature for 2 hours and reacted, then heated by an oil bath at the reflux temperature (74°C), and further reacted for 3 hours. By the procedure above, a solution containing a cyclic silane compound was obtained. Note that the total volume of toluene and tetrahydrofuran in the reaction solution relative to 10 parts by mass of metallic sodium used in the first step was 442.2 mL, and the volume proportion of tetrahydrofuran relative to the total volume of toluene and tetrahydrofuran was 57 vol%.

### Test 32

A solution containing a cyclic silane compound was obtained in the same manner as in Test 1 except that both tetraglyme and naphthalene were contained in the first step and none of tetraglyme and naphthalene was added in the second step.

### Test 33

A solution containing a cyclic silane compound was obtained in the same manner as in Test 1 except that both tetraglyme and naphthalene were added in the second step and none of tetraglyme and naphthalene was contained in the first step.

### Test 34

A solution containing a cyclic silane compound was obtained in the same manner as in Test 1 except that THF was not added in the reaction solution in the second step.

### Test 35

A solution containing a cyclic silane compound was obtained in the same manner as in Test 34 except for changing the content of tetraglyme in the first step to that listed in Table 2.

### Test 36

A solution containing a cyclic silane compound was obtained in the same manner as in Test 35 except for using triglyme in place of tetraglyme in the first step.

### Test 37

A solution containing a cyclic silane compound was obtained in the same manner as in Test 35 except for using octane in place of toluene in the first step.

### Test 38

A solution containing a cyclic silane compound was obtained in the same manner as in Test 35 except for changing the content of metallic sodium in the first step to that listed in Table 2.

For each of the reaction products obtained in Tests 1 to 38, the reaction solution was analyzed by gas chromatography. The measurement conditions were as follows.

### Gas Chromatography Measurement

Instrument: GC-2025 (available from Shimadzu Corporation)
Column: DB1301 (Agilent Technologies), length (30 m), Diam. (0.320 m), Film (0.25 m)
Carrier gas: He
Detector: FID

Then, formation of cyclic silane (dodecamethylcyclohexasilane (six-membered ring), decamethylcyclopentasilane (five-membered ring), tetradecamethylcycloheptasilane (seven-membered ring)) was confirmed, and the yield of each of these was determined.

The preparation conditions and evaluation results of Tests 1 to 17 are listed in Table 1, and the preparation conditions and evaluation results of Tests 18 to 38 are listed in Table 2.

**[Table 1]**

| | First step | | | | | | | Second step | | | | | Evaluation | | | |
|---|---|---|---|---|---|---|---|---|---|---|---|---|---|---|---|---|
| | Conditions | Solvent A | | Na | | Additive 1 | | Conditions | Solvent A + THF | | Additive 2 | | Yield | | | |
| | Reaction temperature | Type | Content^{*1} [part by mass] | Form | Molar equivalent X^{*2} [eq.] | Type | Molar equivalent Y^{*3} [eq.] | Reflux temperature [°C] | Total solvent amount relative to Na [mL] | THF proportion [vol%] | Type | Molar equivalent Z^{*3} [eq.] | Five-membered ring [%] | Six-membered ring [%] | Seven-membered ring [%] | Total [%] |
| Test 1 | Heating to reflux | Toluene | 68.6 | Metallic Na | 1.20 | Tetraglyme | 0.040 | 73 | 167 | 52.8 | Naphthalene | 0.08 | 9.2 | 74.5 | 1.6 | 85.3 |
| Test 2 | Heating to reflux | Toluene | 68.6 | Metallic Na | 1.20 | 15-crown-5-ether | 0.040 | 73 | 167 | 52.8 | Naphthalene | 0.08 | 9.4 | 73.2 | 1.8 | 84.4 |
| Test 3 | Heating to reflux | Toluene | 68.6 | Metallic Na | 1.20 | THF | 0.040 | 73 | 167 | 52.8 | Naphthalene | 0.08 | 7.1 | 27.5 | 1.3 | 35.9 |
| Test 4 | Heating to reflux | Toluene | 68.6 | Metallic Na | 1.20 | - | - | 73 | 167 | 52.8 | Naphthalene | 0.08 | 5.9 | 19.3 | 1.1 | 26.3 |
| Test 5 | Heating to reflux | Toluene | 68.6 | Metallic Na | 1.20 | Tetraglyme | 0.040 | 73 | 167 | 52.8 | - | - | 12.2 | 11.5 | 2.9 | 26.6 |
| Test 6 | Heating to reflux | Toluene | 68.6 | SD | 1.20 | Tetraglyme | 0.040 | 73 | 167 | 52.8 | Naphthalene | 0.08 | 11.0 | 68.8 | 1.2 | 80.9 |
| Test 7 | Room temperature | Toluene | 68.6 | SD | 1.20 | Tetraglyme | 0.040 | 73 | 167 | 52.8 | Naphthalene | 0.08 | 11.3 | 69.0 | 1.6 | 81.9 |
| Test 8 | Heating to reflux | Toluene | 68.6 | SD | 1.20 | - | - | 73 | 167 | 52.8 | Naphthalene | 0.08 | 6.2 | 15.4 | 1.1 | 22.8 |
| Test 9 | Heating to reflux | Toluene | 2.0 | Metallic Na | 1.20 | Tetraglyme | 0.040 | 70 | 167 | 98.6 | Naphthalene | 0.08 | 6.9 | 66.9 | 1.4 | 75.2 |
| Test 10 | Heating to reflux | Toluene | 8.1 | Metallic Na | 1.20 | Tetraglyme | 0.040 | 70 | 167 | 94.4 | Naphthalene | 0.08 | 7.5 | 75.8 | 1.5 | 84.8 |
| Test 11 | Heating to reflux | Toluene | 92.7 | Metallic Na | 1.20 | Tetraglyme | 0.040 | 76 | 167 | 36.1 | Naphthalene | 0.08 | 9.1 | 65.4 | 1.4 | 75.9 |
| Test 12 | Heating to reflux | Toluene | 102.8 | Metallic Na | 1.20 | Tetraglyme | 0.040 | 76 | 167 | 29.2 | Naphthalene | 0.08 | 10.2 | 60.0 | 1.3 | 71.5 |
| Test 13 | Heating to reflux | Toluene | 109.3 | Metallic Na | 1.20 | Tetraglyme | 0.040 | 78 | 167 | 25.0 | Naphthalene | 0.08 | 8.7 | 54.3 | 1.1 | 64.1 |
| Test 14 | Heating to reflux | Toluene | 286.0 | Metallic Na | 1.20 | Tetraglyme | 0.040 | 73 | 605 | 52.8 | Naphthalene | 0.08 | 11.7 | 47.4 | 0.9 | 60.0 |
| Test 15 | Heating to reflux | Toluene | 244.2 | Metallic Na | 1.20 | Tetraglyme | 0.040 | 73 | 519 | 52.8 | Naphthalene | 0.08 | 13.2 | 74.3 | 1.2 | 88.7 |
| Test 16 | Heating to reflux | Toluene | 39.5 | Metallic Na | 1.20 | Tetraglyme | 0.040 | 73 | 84 | 52.8 | Naphthalene | 0.08 | 8.7 | 70.9 | 1.8 | 81.4 |
| Test 17 | Heating to reflux | Toluene | 26.4 | Metallic Na | 1.20 | Tetraglyme | 0.040 | 73 | 56 | 52.8 | Naphthalene | 0.08 | 8.5 | 69.2 | 2.0 | 79.7 |

| | | | | | | | | | | | | | | | | |
|---|---|---|---|---|---|---|---|---|---|---|---|---|---|---|---|---|
| *1 Content relative to 10 parts by mass of metallic sodium *2 Molar equivalent of metallic sodium relative to 1 functional group of silane compound (monomer) *3 Molar equivalent relative to silicon atom of silane compound (monomer) | | | | | | | | | | | | | | | | |

**[Table 2]**

| | First step | | | | | | | Second step | | | | | Evaluation | | | |
|---|---|---|---|---|---|---|---|---|---|---|---|---|---|---|---|---|
| | Conditions | Solvent A | | Na | | Additive 1 | | Conditions | Solvent A + THF | | Additive 2 | | Yield | | | |
| | Reaction temperature | Type | Content^{*1} [part by mass] | Form | Molar equivalent X^{*2} [eq.] | Type | Molar equivalent Y^{*3} [eq.] | Reflux temperature [°C] | Total solvent amount relative to Na [mL] | THF proportion [vol%] | Type | Molar equivalent Z^{*3} [eq.] | Five-membered ring [%] | Six-membered ring [%] | Seven-membered ring [%] | Total [%] |
| Test 18 | Heating to reflux | Toluene | 68.6 | Metallic Na | 1.20 | Tetraglyme | 0.160 | 74 | 167 | 52.8 | Naphthalene | 0.08 | 7.9 | 66.4 | 2.0 | 76.3 |
| Test 19 | Heating to reflux | Toluene | 68.6 | Metallic Na | 1.20 | Tetraglyme | 0.110 | 73 | 167 | 52.8 | Naphthalene | 0.08 | 8.7 | 72.4 | 1.9 | 83.0 |
| Test 20 | Heating to reflux | Toluene | 68.6 | Metallic Na | 1.20 | Tetraglyme | 0.010 | 73 | 167 | 52.8 | Naphthalene | 0.08 | 9.3 | 62.0 | 1.3 | 72.6 |
| Test 21 | Heating to reflux | Toluene | 68.6 | Metallic Na | 1.20 | Tetraglyme | 0.005 | 73 | 167 | 52.8 | Naphthalene | 0.08 | 8.3 | 46.6 | 1.2 | 56.1 |
| Test 22 | Heating to reflux | Toluene | 68.6 | Metallic Na | 1.10 | Tetraglyme | 0.040 | 73 | 167 | 52.8 | Naphthalene | 0.08 | 9.5 | 70.8 | 1.5 | 81.8 |
| Test 23 | Heating to reflux | Toluene | 68.6 | Metallic Na | 1.00 | Tetraglyme | 0.040 | 73 | 167 | 52.8 | Naphthalene | 0.08 | 9.3 | 59.9 | 1.2 | 70.4 |
| Test 24 | Heating to reflux | Toluene | 78.6 | Metallic Na | 1.05 | Tetraglyme | 0.040 | 73 | 167 | 52.8 | Naphthalene | 0.08 | 9.7 | 74.0 | 1.8 | 85.5 |
| Test 25 | Heating to reflux | Toluene | 78.6 | Metallic Na | 1.05 | Tetraglyme | 0.040 | 73 | 167 | 52.8 | Naphthalene | 0.16 | 9.2 | 69.1 | 1.6 | 79.9 |
| Test 26 | Heating to reflux | Toluene | 78.6 | Metallic Na | 1.05 | Tetraglyme | 0.040 | 73 | 167 | 52.8 | Naphthalene | 0.24 | 8.8 | 69.4 | 1.5 | 79.7 |
| Test 27 | Heating to reflux | Toluene | 78.6 | Metallic Na | 1.05 | Tetraglyme | 0.040 | 73 | 167 | 52.8 | Naphthalene | 0.04 | 9.7 | 69.1 | 1.5 | 80.3 |
| Test 28 | Heating to reflux | Xylene | 68.6 | Metallic Na | 1.20 | Tetraglyme | 0.040 | 73 | 167 | 52.8 | Naphthalene | 0.08 | 10.0 | 76.6 | 1.8 | 88.4 |
| Test 29 | Heating to reflux | Toluene | 68.6 | Metallic Na | 1.20 | Tetraglyme | 0.040 | 73 | 167 | 52.8 | Biphenyl | 0.08 | 9.2 | 66.9 | 1.3 | 77.4 |
| **Test** 30 | Heating to reflux | Toluene | 68.6 | Metallic Na | 1.20 | Tetraglyme | 0.040 | 73 | 167 | 52.8 | Naphthalene | 0.08 | 10.3 | 70.8 | 1.7 | 82.8 |
| | Heating to reflux | THF | 4.1 | | | | | 73 | | | | | | | | |
| Test 31 | Heating to reflux | Xylene | 166.1 | Metallic Na | 1.08 | - | - | 73 | 442 | 57.0 | Naphthalene | 0.23 | 6.0 | 19.0 | 0.0 | 25.0 |
| **Test** 32 | Heating to reflux | Toluene | 78.6 | Metallic Na | 1.20 | Tetraglyme | 0.040 | 73 | 167 | 52.8 | - | - | 19.3 | 52.8 | 0.3 | 72.4 |
| | | | | | | Naphthalene | 0.040 | 73 | | | - | - | | | | |
| Test 33 | Heating to reflux | Toluene | 78.6 | Metallic Na | 1.20 | - | - | 73 | 167 | 52.8 | Tetraglyme | 0.040 | 7.3 | 53.0 | 0.0 | 60.3 |
| | | | | | | - | - | 73 | | | Naphthalene | 0.040 | | | | |
| Test 34 | Heating to reflux | Toluene | 68.6 | Metallic Na | 1.20 | Tetraglyme | 0.04 | 112 | - | - | Naphthalene | 0.08 | 12.6 | 52.7 | 1.8 | 67.1 |
| Test 35 | Heating to reflux | Toluene | 68.6 | Metallic Na | 1.20 | Tetraglyme | 0.10 | 115 | - | - | Naphthalene | 0.08 | 11.7 | 61.5 | 1.9 | 75.1 |
| Test 36 | Heating to reflux | Toluene | 68.6 | Metallic Na | 1.20 | Triglyme | 0.10 | 114 | - | - | Naphthalene | 0.08 | 12.3 | 55.0 | 2.0 | 69.3 |
| Test 37 | Heating to reflux | Octane | 68.6 | Metallic Na | 1.20 | Tetraglyme | 0.10 | 126 | - | - | Naphthalene | 0.08 | 11.4 | 63.3 | 1.7 | 76.4 |
| Test 38 | Heating to reflux | Toluene | 68.6 | Metallic Na | 1.05 | Tetraglyme | 0.10 | 114 | - | - | Naphthalene | 0.08 | 12.9 | 61.0 | 1.6 | 75.5 |

| | | | | | | | | | | | | | | | | |
|---|---|---|---|---|---|---|---|---|---|---|---|---|---|---|---|---|
| *1 Content relative to 10 parts by mass or metallic sodium *2 Molar equivalent of metallic sodium relative to 1 functional group of silane compound (monomer) *3 Molar equivalent relative to silicon atom of silane compound (monomer) | | | | | | | | | | | | | | | | |

As shown in Table 1 and Table 2, Tests 1, 2, 6, 7, 9 to 30, and 32 to 38, which used the particular polyether compound and the polycyclic aromatic hydrocarbon and the like, each had a high yield regardless of the form of metallic sodium compared to the yields of Tests 3 to 5, 8, and 31, which did not use at least one of the particular polyether compound or the polycyclic aromatic hydrocarbon.

In particular, it was found that the yield was further increased in a case where tetraglyme (polyether compound represented by Formula (I)) was added in the first step rather than in the second step (comparison between Tests 1 and 33).

Furthermore, it was found that the yield was further increased in a case where naphthalene (polycyclic aromatic hydrocarbon) was added in the second step rather than in the first step (comparison between Tests 1 and 32).

Furthermore, it was found that the yield was further increased when the content of tetraglyme in the first step was not lower than the predetermined amount (comparison of Tests 18 to 21 and 1). Furthermore, it was found that tetraglyme (chain) achieved a yield comparable to the yield of the 15-crown-5 (ring) (comparison between Tests 1 and 2).

Furthermore, it was found that a high yield was maintained even when the molar equivalent of naphthalene added in the second step was small (comparison of Tests 24 to 27).

Furthermore, it was found that a high yield was maintained even when an additional solvent was contained in the first step (comparison between Tests 1 and 30).

Furthermore, it was found that, even when THF was not added in the reaction solution in the second step, good yield was achieved (comparison of Tests 34 to 38 and Tests 3 to 5, 8, and 31). It is presumed that this is because the reaction solution contained a polyether compound added in the first step, even when THF was not mixed with the reaction solution in the second step, a complex formed from sodium and the polycyclic aromatic hydrocarbon or the polyphenyl hydrocarbon was formed, and thus the decomposition-conversion reaction of the chain polysilane compound proceeded well.

The present application claims priority to Japanese patent application No. 2023-140015 filed on August 30, 2023. The contents described in the specification of the foregoing application are all incorporated in the specification of the present application by reference.

### INDUSTRIAL APPLICABILITY

The present invention can provide a method for producing a cyclic silane compound, the method being capable of producing a cyclic silane compound in a one-pot approach from a silane monomer at a high reaction yield regardless of the form of the reactant to be used and even when the reactant is used in a small amount.

## Claims

1. A method for producing a cyclic silane compound, the method comprising:
a first step of subjecting a silane compound to a polymerization reaction in a first solution containing sodium to obtain a reaction solution containing a chain polysilane compound; and
a second step of subjecting the chain polysilane compound to a decomposition-conversion reaction in a second solution containing the reaction solution to obtain a cyclic silane compound;
a polycyclic aromatic hydrocarbon or a polyphenyl hydrocarbon being contained in the first solution or mixed with the reaction solution; and
a polyether compound represented by Formula (I) or (II) being contained in the first solution or being mixed with the reaction solution: 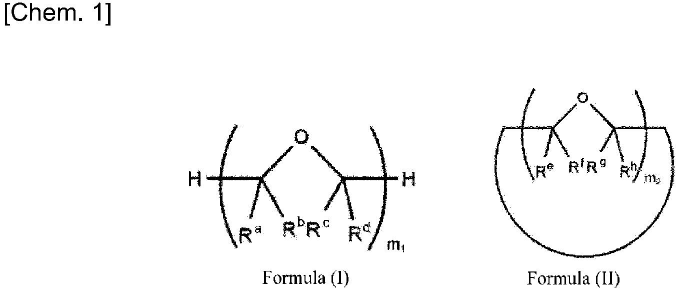
where, in Formulas (I) and (II),
R^{a} to R^{h} are each independently a hydrogen atom or an alkyl group, and
m₁ and m₂ are each an integer of 2 or greater and 7 or less.

2. The method for producing a cyclic silane compound according to claim 1, wherein
the second step is performed in a second solution in which tetrahydrofuran is mixed with the reaction solution.

3. The method for producing a cyclic silane compound according to claim 1 or 2, wherein
the first solution contains a liquid mixture containing metallic sodium and a hydrocarbon solvent.

4. The method for producing a cyclic silane compound according to claim 3, wherein,
in the first step,
the first solution is heated to a temperature not lower than a melting point of the metallic sodium.

5. The method for producing a cyclic silane compound according to claim 4, wherein
the second step is performed by heating the chain polysilane compound in the second solution.

6. The method for producing a cyclic silane compound according to claim 5, wherein
the heating temperature is 40°C or higher and not higher than a reflux temperature.

7. The method for producing a cyclic silane compound according to claim 4, wherein
the polyether compound represented by Formula (I) or (II) is contained in the first solution.

8. The method for producing a cyclic silane compound according to claim 7, wherein
the polyether compound represented by Formula (I) is contained in the first solution.

9. The method for producing a cyclic silane compound according to claim 7, wherein
a total molar equivalent of the polyether compound represented by Formula (I) or (II) relative to silicon atoms of the silane compound is 0.003 eq. or greater and 0.180 eq. or less.

10. The method for producing a cyclic silane compound according to claim 4, wherein
the polycyclic aromatic hydrocarbon or the polyphenyl hydrocarbon is mixed with the reaction solution.

11. The method for producing a cyclic silane compound according to claim 10, wherein
biphenyl, anthracene, or naphthalene, as the polycyclic aromatic hydrocarbon, is mixed with the reaction solution.

12. The method for producing a cyclic silane compound according to claim 3 or 4, wherein
the hydrocarbon solvent is an aromatic hydrocarbon solvent.

13. The method for producing a cyclic silane compound according to claim 4, wherein
the second solution contains the hydrocarbon solvent and tetrahydrofuran, and
the second solution contains the tetrahydrofuran in a volume proportion of 23 vol% or greater and 99 vol% or less relative to a total volume of the hydrocarbon solvent and the tetrahydrofuran.
